# EUROPÄISCHE PATENTANMELDUNG

(11) **EP 3 518 390 A1**
(43) Veröffentlichungstag der Anmeldung: **31.07.2019**
(21) Anmeldenummer: 18153384.5
(22) Anmeldetag: 25.01.2018
(51) Int. Cl.: H02K 3/30, H02K 3/34, H02K 5/16

(54) **ELEKTROMOTOREN UND/ODER ELEKTRISCHER ANTRIEB**

(71) Anmelder: Siemens Aktiengesellschaft, 80333 München (DE)
(72) Erfinder: Eder, Florian, 91052 Erlangen (DE); Heller, Janis, 97616 Bad Neustadt (DE); Katzenberger, Tobias, 97631 Bad Königshofen STT Untereßfeld (DE)

(57) **Zusammenfassung**

Die Erfindung betrifft einen Elektromotor und/oder einen elektrischen Antrieb mit einem verstärkten Isolationssystem zum Ersatz/zur Ergänzung und/oder Verbesserung bestehender Isolationssysteme von Elektromotoren und/oder elektrischen Antrieben. Durch die hier erstmals vorgeschlagene Anwendung dünner Diamantfolien, Diamantoberflächenbeschichtungen und/oder Diamantkornfraktionen als Füllstoff in polymerer Matrix in Isolationssystemen werden die zwei gegenläufigen Anforderungen der technischen Entwicklung - Steigerung der Leistungsdichten bei gleichzeitiger Verringerung von Bauraum und Gewicht - realisierbar.

## Beschreibung

Die Erfindung betrifft einen Elektromotor und/oder einen elektrischen Antrieb mit einem verstärkten Isolationssystem zum Ersatz/zur Ergänzung und/oder Verbesserung bestehender Isolationssysteme von Elektromotoren und/oder elektrischen Antrieben.

Auf dem Gebiet der elektrischen Antriebstechnik lassen sich heute auf der Basis von IE4-Asynchronmotoren, Permanentmotoren, so genannte PM-Motoren und/oder synchronen Reluktanzmotoren Betriebswirkungsgrade deutlich über 90% erzielen. Insbesondere die PM-Motoren ermöglichen neben der hohen Leistungsdichte hervorragende Wirkungsgrade, die durchaus noch oberhalb der genormten IE 4 liegen können.

Bei der Konzeptionierung und Auslegung industrieller Antriebe und Elektromotoren werden neben gesteigerter Leistung weiterhin zunehmende Anforderungen an Langlebigkeit und Verschleißfestigkeit sowie an Betriebssicherheit und Energieeffizienz gestellt. Bei Elektromotoren für die industrielle Anwendung sowie bei Elektromobilität steigt der Bedarf an Steigerung der Leistungsdichten bei gleichzeitiger Verringerung von Bauraum und Gewicht, so dass neue, gegenläufig zu realisierende Anforderungen an elektrische und/oder mechanische Komponenten - wie beispielsweise an Isolation und/oder Lager - resultieren.

In der Vergangenheit konnte in vielen technischen Bereichen Systemverbesserung durch Optimierung von Steuerungssoftware oder durch konstruktive Maßnahmen erreicht werden. So wurden in den vergangenen Jahren die Wechselrichter zum Betrieb von Asynchron-Elektromotoren und deren Ansteuerung verbessert, so dass Lagerströme deutlich reduziert und damit die Effizienz gesteigert wurden.

Eine Hauptanforderung an die Niederspannungs-Industriemotoren im Leistungsbereich von ca. 0,7 kW bis hin zu 1,6 MW sind immer effizientere Antriebe. Die höchste genormte Wirkungsgradklasse nach DIN EN 60034-30-1, IE4, soll gemäß Anwendungsforderungen bereits deutlich überschritten werden. Eine signifikante Steigerung der Wirkungsgrade bei gleichbleibenden Abmessungen, also eine deutliche Erhöhung der Leistungsdichte, ist somit für die Zukunft als unumgängliches Entwicklungsziel vorgegeben.

Eine weitere Anforderung, deren Bedeutung in den vergangenen Jahren stark zugenommen hat, ist der Betrieb der Elektromotoren in drehzahlregulierbaren Systemen. Die für diesen Betrieb benötigten Frequenzumrichter haben jedoch ebenfalls wachsende Effizienzanforderungen, welche mit schnelleren Schaltgeschwindigkeiten realisierbar sind.

In allen Fällen steigt die elektrische Belastung des Isolationssystems, also beispielsweise der Motorwicklung extrem, so dass die Lebensdauer der herkömmlichen und so hoch belasteten Isolationssysteme immer geringer wird.

Aufgabe der vorliegenden Erfindung ist es daher, Elektromotoren und/oder elektrische Antriebe mit dünnen und stabilen Isolationssystemen zu schaffen, die den hohen thermischen und/oder elektrischen Teilentladungs-Anforderungen im Isolationssystem und/oder den Lager in Elektromotoren und/oder elektrischen Antrieben gerecht werden, damit die zwei gegenläufigen Anforderungen der technischen Entwicklung - Steigerung der Leistungsdichten bei gleichzeitiger Verringerung von Bauraum und Gewicht - realisierbar werden.

Diese Aufgabe wird durch den Gegenstand der vorliegenden Erfindung, wie er durch die Beschreibung und die Ansprüche offenbart ist, gelöst.

Lösung der Aufgabe und Gegenstand der Erfindung sind daher ein Elektromotor und/oder elektrischer Antrieb mit einem Blechpaket und/oder einem Leiter und einem Isolationssystem, wobei das Isolationssystem und/oder zumindest Teile des Isolationssystems eine Verstärkung aufweist, die kristalline Diamanten umfasst.

Nach einer bevorzugten Ausführungsform der Erfindung sind die kristallinen Diamanten nano- und/oder mikrokristallin.

Nach einer bevorzugten Ausführungsform der Erfindung liegen die Diamanten in Form einer Diamantoberflächenbeschichtung auf der zu isolierenden Oberfläche und/oder in Form einer selbsttragenden Diamantfolie vor.

Die Diamanten liegen insbesondere bevorzugt lagenförmig vor, so dass im Isolationssystem zwischen der zu isolierenden Oberfläche und dem polymeren Isolationssystem zumindest zum Teil eine Diamantlage angeordnet ist.

Allgemeine Erkenntnis der Erfindung ist, dass im Einsatzbereich von Elektromotoren eine Verstärkung der Isolation durch Diamanten, insbesondere mikrokristalline Diamanten, in Form einer Diamantoberflächenbeschichtung und/oder eine Diamantfolie als Teil des Isolationssystems aufgrund ihrer einzigartigen Materialeigenschaft von höchster Wärmeleitfähigkeit bei hoher Elektroisolation, eine Möglichkeit bietet, die Leistungsklasse bei gleichbleibender Baugröße und/oder Gewicht stark zu erhöhen. Ja nach Auslegung des Elektromotors und/oder des elektrischen Antriebs sind mit einer Diamantoberflächenbeschichtung und/oder einer Diamantfolie im Isolationssystem Leistungssteigerungen von bis zu 300% realistisch. Gleichzeitig ist eine geringfügige Steigerung der ohnehin schon hohen Effizienz von Elektromotoren aufgrund der besseren Wärmeabfuhr ins Blechpaket von bis zu 3% realistisch. Durch die erhöhte Stabilität des Isolationssystems werden deren Lebensdauer und damit die Lebensdauer des Elektromotors auch signifikant erhöht.

Nach einer weiteren vorteilhaften Ausführungsform wird als Diamantbeschichtung beispielsweise eine Oberflächenbeschichtung, die eine Dicke im Bereich von 1-200µm, insbesondere im Bereich von 30-100 µm, besonders bevorzugt eine Dicke um die 50pm hat, bezeichnet.

Nach einer weiteren vorteilhaften Ausführungsform wird eine Diamantfolie, also eine dünne Diamantschicht in Form einer selbsttragenden Folie als Isolationssystem und/oder Teil des Isolationssystems eingesetzt.

Als Diamantoberflächenbeschichtung wird zum Beispiel eine Diamantlage auf einem Substrat, wie beispielsweise die Innenseite einer Nut, einer Wicklung, eines Lagers, der Welle eines Lagers, eines Gehäuses und/oder die Innenseite eines Gehäuses eines Elektromotors gegenüber dem Zündspalt, verstanden.

Als "Diamantlage" wird vorliegend ein vorgefertigter Aufbauaus Diamanten, beispielsweise aus einer oder mehreren Schichten von Diamanten, bezeichnet, die entweder selbsttragend oder auf einem Substrat, wie der Innenfläche einer Nut aufgebaut ist. Eine Diamantlage bildet beispielsweise eine "Kachel", aus der eine Diamantoberflächenbeschichtung durch Aufbringen mehrerer Kacheln auf die Oberfläche des Bauteils, die das Substrat bildet, zusammengesetzt werden kann.

Eine Diamantlage umfasst zumindest eine Schicht mit Diamanten. Als Diamantschicht wird eine flächige Anordnung von Diamanten verstanden. Die Schicht hat deshalb in der Regel eine Dicke, die mit der Korngröße der Diamanten korreliert. Bevorzugt liegt die Dimension einer Diamantschicht dabei im Bereich kleiner 7pm, insbesondere kleiner 5 µm.

Nach einer vorteilhaften Ausführungsform ist die Dicke einer Diamantschicht kleiner 2pm, insbesondere kleiner 1µm.

Eine Diamantoberflächenbeschichtung umfasst beispielsweise mehrere Diamantschichten aufeinander in Stapelform. Dabei können Dichte, Korngröße und/oder Ausrichtung der Diamanten von Schicht zu Schicht und/oder innerhalb einer Schicht variieren.

Beispielsweise können die Diamantmikrokristalle in Form einer Diamantlage und/oder einer selbsttragenden Diamantfolie mit jedem Substrat verbunden werden. Dabei können Klebe-, Schmelz-, Löt- und Schweißtechniken zur Verbindung der Diamantlage mit der zu beschichtenden Oberfläche vorgesehen sein.

Zur Verbindung der Oberfläche mit einer Diamantlage und/oder einer Diamantfolie werden bevorzugt Verbindungstechniken aus dem Bereich der hochisolierenden, wärmeleitenden und/oder hochtemperaturfesten Verbindungstechnik eingesetzt, die eine Dauereinsatztemperatur von beispielsweise 250°C und mehr aushalten. Zudem sollte der Klebeverbund eine beispielsweise metallische und/oder wärmeleitfähige Oberfläche einerseits und eine Substratoberfläche wie die einer Diamantlage andererseits wärmeleitend, elektrisch isolierend und/oder auch mechanisch belastbar verbinden.

Eine Diamantoberflächenbeschichtung, die insbesondere für thermisch höchst beanspruchte Anwendungsbereiche, beispielsweise mit Betriebstemperaturen größer 500°C in Frage kommt, wird auf einer Oberflächen direkt abgeschieden und erzeugt.

Dabei sind Nano- und/oder Mikrodiamanten auf der belasteten und/oder zu isolierenden Oberfläche selbst vorgesehen.

Es ist beispielsweise vorteilhaft, vorgefertigte Diamantlagen, also beispielsweise selbsttragende Kacheln oder Kacheln auf einem Träger, wie einer Folie, als Teilstücke auf dem Substrat, also der Blechpaket-Nut und/oder einer Leiter-Oberfläche anzubringen.

Nach einer vorteilhaften Ausführungsform der Erfindung wird die Oberfläche des Substrats vor der Aufbringung oder Abscheidung der Diamanten, beispielsweise im CVD-Verfahren, vorbehandelt, insbesondere beispielsweise durch einen elektrolytischen Plasmaprozess, vorbehandelt. Diese Vorbehandlung ist auch sinnvoll, wenn die Diamanten beispielsweise in Form einer Diamantlage mit Träger aufgebracht werden. Eine Art einer hier sinnvollerweise einsetzbaren Diamantlage ist die aus der EP 2403974 bekannte Diamantfolie.

Bei einer beispielsweise nasschemischen Vorbehandlung durch einen elektrolytischen Plasmaprozess wird die zu beschichtende Oberfläche in ein Elektrolytbad eingetaucht und wird dort mit einer gepulsten Frequenz beaufschlagt, so dass sich substratnah durch Elektrolyse Gasblasen bilden, in denen ein Plasma gezündet wird. Auf diese Weise können herstellungsbedingte Oberflächenrauigkeiten bedarfsgerecht reduziert werden, die Oberflächen gereinigt und/oder zur Verbesserung der chemischen Anbindung einer Diamantlage und/oder der Abscheidung von Diamanten funktionalisiert und damit optimal für eine Aufbringung der Diamantlage und/oder Erzeugung einer Diamantoberfläche vorbereitet werden. Diese Vorbehandlung umfasst beispielsweise auch eine unterwanderungsbeständige Ausrüstung des mit einer Diamantoberflächenbeschichtung versehenen Bereichs der Substrat-Oberfläche.

Ziel der Vorbehandlung ist neben der Substratreinigung die Aufrauhung, so dass eine mechanische Verklammerung zwischen Klebstoff, Lötstoff, Schmelze und zu beschichtender Oberfläche möglich wird.

Nach einer vorteilhaften Ausführungsform wird auch die Unterseite einer selbsttragenden Diamantfolie für die Verklebung vorbereitet. Beispielsweise können durch Plasmaaktivierung die auf der Diamantoberfläche sitzenden C-H-Bindungen aufgebrochen werden, was eine deutliche Erhöhung der Benetzungsfähigkeit der Diamantlage bewirkt. Auf die so aktivierte Oberfläche der Diamanten können auch Verbindungsschichten, beispielsweise Metallschichten, insbesondere sehr dünne Metallschichten im Bereich von einigen Nanometern, also beispielsweise 1 bis 50 nm, insbesondere 1 bis 30 nm und besonders bevorzugt 1 bis 10 nm Schichtdicke, aufgebracht werden.

Diese erleichtern dann die Verbindung, beispielsweise ein Verlöten, Verkleben, Verschweißen mit dem Bauteil. Eine Verbindungsschicht ermöglicht so beispielsweise eine Adhäsion einer selbsttragenden CVD-Diamantlage mittels Schweißen, insbesondere Elektronenstrahlschweißen, Laserschweißen und/oder dergleichen.

So wird ein Bauteil mit einer Diamantoberflächenbeschichtung, bei dem die Diamanten im Grenzbereich zwischen Substrat und Diamantlage-Unterseite eine Beschichtung aufweisen, hergestellt.

Zur Anbringung in der Nut kann eine weitere Verbindungsschicht vorgesehen sein. Insbesondere können dadurch thermisch induzierte Spannungen zwischen dem Blechpaket und einer Diamantlage, die je nach Material des Blechpakets sehr unterschiedliche thermische Ausdehnungskoeffizienten haben können, kompensiert werden.

Alternativ dazu kann auch eine direkte Abscheidung von mikrokristallinen und/oder nanokristallinen Diamanten auf einem metallischen Substrat, wie beispielsweise auf einem elektrischen Leiter, einem Lager und oder einer Nut eines Blechpakets erfolgen. Dies ist insbesondere für thermisch höchstbeanspruchte Anwendungsbereiche, also beispielsweise bei Betriebstemperaturen von bis zu 500°C, vorgesehen.

Nach einer Ausführungsform der Erfindung handelt es sich bei der Diamantlage um eine Diamantlage auf beispielsweise einem metallischen Träger wie Nickel, Chrom, Kupfer, Molybdän, Wolfram und/oder einer beliebigen Legierung und/oder beispielsweise einem Silizium-Wafer. Eine Diamantlage, wie sie vorliegend einsetzbar ist, kann aus Kristallen/Kristalliten mit verschiedenen Kristallgrößen im Nano- und/oder Mikrometerbereich und/oder aus einer Diamantoberflächenbeschichtung, deren mittlere Kristallgröße innerhalb der Diamantschicht gleich bleibt, respektive ohne eindeutig zuordenbare Tendenz variiert und/oder von der Unterseite hin zu einer Oberseite ab- oder zunimmt, beschaffen sein.

Nach einer vorteilhaften Ausführungsform der Erfindung umfasst die Beschichtung mehrere Lagen von Diamanten ohne Zwischenschichten übereinander.

Nach einer anderen Ausführungsform handelt es sich um eine selbsttragende Diamantlage, wobei mehrere Lagen von Diamanten unterschiedlicher mittlerer Korngröße so miteinander kombiniert werden, dass eine selbsttragende Schicht entsteht.

Nach einer Ausführungsform variiert die durchschnittliche Korngröße der Diamanten innerhalb einer Lage.

Nach einer anderen vorteilhaften Ausführungsform umfasst die Diamantoberfläche mehrere Diamantschichten jeweils unterschiedlicher Dicke.

Nach vorläufigen Tests eröffnet der Einsatz einer Diamantoberflächenbeschichtung in den unterschiedlichen Bereichen von Elektromotoren und/oder Antrieben eine Leistungssteigerung von bis zu 300%.

Beispielsweise kann eine mit Diamanten verstärkte Isolation in einer Nut einer Elektromotorwicklung vorliegen. Dabei bildet die Nutinnenfläche das Substrat, auf dem die Diamanten entweder direkt zur Bildung einer Diamantoberflächenbeschichtung abgeschieden werden und/oder mit dem eine Diamantfolie oder Teile davon in Form von Kacheln, verbunden sind.

Nach einer weiteren Ausführungsform ist eine Aufbringung als Diamantfolie auf einem Substrat, das die Welle eines Lagers bildet, also so zu sagen als Lagersitz zur Isolation gegen Lagerströme.

Nach einer weiteren Ausführungsform ist die Verstärkung durch Diamanten als Korrosionsschutz, insbesondere bei EX-Motoren, beispielsweise im Zündspalt, vorgesehen. Dabei ist insbesondere vorteilhaft, wenn der Innenraum des Gehäuses vor Korrosion geschützt wird, weil eine sich verändernde Geometrie keinen EX-Schutz mehr gewährleistet.

Die mittlere Korngröße der Diamanten kann im Bereich von 0,01 nm bis 10 µm beliebig variieren.

Nach einer weiteren vorteilhaften Ausführungsform der Erfindung sind mikrokristalline und/oder nanokristalline Diamanten in das polymere Isolationssystem eingearbeitet. Dabei kann ein Lagenaufbau mit Diamantlage und Isolationslage alternierend und/oder die Einarbeitung von Diamanten als Füllstoff in das Polymer vorgesehen sein.

Bevorzugt werden Diamanten unterschiedlicher Korngröße - beispielsweise in Form definierter Diamantkornfraktionen - in das Polymer als Füllstoff eingearbeitet.

Durch die hier erstmals vorgeschlagene Anwendung dünner Diamantfolien, Diamantoberflächenbeschichtungen und/oder Diamantkornfraktionen als Füllstoff in polymerer Matrix in Isolationssystemen werden die zwei gegenläufigen Anforderungen der technischen Entwicklung - Steigerung der Leistungsdichten bei gleichzeitiger Verringerung von Bauraum und Gewicht - realisierbar.

Insbesondere werden folgende Vorteile realisierbar:
- Steigerung der Effizienz des Gesamtsystems durch Abbau von Wärmebarrieren.
- Dem Isolationssystem wird eine gesteigerte Wärmeleitfähigkeit verliehen, so dass die entstehende Verlustwärme eines Elektromotors beispielsweise aus der Wicklung verbessert ins Blechpaket abgeführt werden kann.

- Reduzierung der Isolationsdicke auf ca. 0,1 mm, dadurch werden auch höhere Füllgrade in der Wicklung möglich
- Insbesondere bei nicht wassergekühlten Motoren ist damit eine Steigerung des Wirkungsgrades möglich
- Steigerung der Motorlebensdauer und Zuverlässigkeit, da von Diamant keine Alterungserscheinungen, thermisch oder elektrisch, bekannt sind.

## Patentansprüche

1. Elektromotor und/oder elektrischer Antrieb mit einem Blechpaket und/oder einem Leiter und einem Isolationssystem, wobei das Isolationssystem und/oder zumindest Teile des Isolationssystems eine Verstärkung aufweist, die kristalline Diamanten umfasst.

2. Elektromotor und/oder elektrischer Antrieb nach Anspruch 1, wobei die Verstärkung mikrokristalline Diamanten umfasst.

3. Elektromotor und/der elektrischer Antrieb nach Anspruch 1 oder 2, wobei die Verstärkung nanokristalline Diamanten umfasst.

4. Elektromotor und/der elektrischer Antrieb nach einem der vorstehenden Ansprüche, wobei die Verstärkung eine Diamantoberflächenbeschichtung umfasst.

5. Elektromotor und/der elektrischer Antrieb nach einem der vorstehenden Ansprüche, wobei die Verstärkung eine Diamantfolie umfasst.

6. Elektromotor und/der elektrischer Antrieb nach einem der vorstehenden Ansprüche, wobei die Verstärkung eine Diamantlage, eine oder mehrere Diamantschichten enthaltend, umfasst.

7. Elektromotor und/der elektrischer Antrieb nach einem der vorstehenden Ansprüche, wobei die Verstärkung eine Diamantlage mit einer Dicke im Bereich von 1 bis 300 µm umfasst.

8. Elektromotor und/der elektrischer Antrieb nach einem der vorstehenden Ansprüche, wobei die Verstärkung eine Diamantoberflächenbeschichtung, eine oder mehrere Kacheln aus Diamantlage umfassend, umfasst.

9. Elektromotor und/der elektrischer Antrieb nach einem der vorstehenden Ansprüche, wobei die Verstärkung Diamanten mit einer Korngröße von bis zu 7µm umfasst.

10. Elektromotor und/der elektrischer Antrieb nach einem der vorstehenden Ansprüche, wobei die Verstärkung durch Klebe-, Schmelz-, Löt- und/oder Schweißtechnik mit einem Substrat verbunden ist.

11. Elektromotor und/der elektrischer Antrieb nach einem der vorstehenden Ansprüche, wobei die Verstärkung zumindest teilweise durch direktes Abscheiden der Diamanten auf dem Substrat realisiert ist.

12. Elektromotor und/der elektrischer Antrieb nach einem der vorstehenden Ansprüche, wobei als Substrat zumindest zum Teil die Innenfläche einer Nut in der Wicklung eines Elektromotors vorgesehen ist.

13. Elektromotor und/der elektrischer Antrieb nach einem der vorstehenden Ansprüche, wobei als Substrat die Welle eines Lagers eines elektrischen Antriebs vorgesehen ist.

14. Elektromotor und/der elektrischer Antrieb nach einem der vorstehenden Ansprüche, wobei als Substrat zumindest zum Teil die Innenseite eines Gehäuses vorgesehen ist.

15. Elektromotor und/der elektrischer Antrieb nach einem der vorstehenden Ansprüche, wobei als zumindest ein Substrat die Innenseite eines Gehäuses eines Elektromotors gegenüber dem Zündspalt vorgesehen ist.
